# EUROPEAN PATENT APPLICATION

(11) **EP 2 182 447 A1**
(43) Date of publication of application: **05.05.2010**
(21) Application number: 09174899.6
(22) Date of filing: 03.11.2009
(51) Int. Cl.: G06F 17/24, G06F 17/27, G06F 17/30

(54) **Real-time semantic annotation system and the method of creating ontology documents on the fly from natural language string entered by user**

(30) Priority: 03.11.2008 KR 20080108474
(71) Applicant: Choi, Key-Sun, Daejeon 305-701 (KR); Ahn, Jinhyun, Daejeon 305-701 (KR); Byun, Edward KangSup, Daejeon 305-701 (KR)
(72) Inventor: Jung, Jason J., Gyenogsangbuk-do, 712-749 (KR); Choi, Key-Sun, Daejeon 305-701 (KR); Ahn, Jinhyun, Gyenogsangbuk-do, 712-749 (KR); Byun, Edward KangSup, Gyenogsangbuk-do, 712-749 (KR)
(74) Representative: Hill, Justin John

(57) **Abstract**

Disclosed herein are a real-time semantic annotation system and a method of converting user-entered natural language strings into semantically-readable knowledge structure documents using the system in real time. The real-time semantic annotation system includes a natural language character string input device for enabling a user to enter natural language character strings, a character string pattern triplet-mapping table for storing natural language character string patterns and their corresponding triplets, a triplet extraction device for converting the entered natural language character strings into triplets by analyzing and processing the entered natural language character strings using the pattern-triplet mapping table, an alternative word recommendation device for providing notification that a user should enter an alternative word, and a machine-readable document generation device for generating machine-readable documents from the triplets using a semantically-readable knowledge structure.

## Description

### BACKGROUND OF THE INVENTION

### 1. Field of the Invention

The present invention relates to a real-time semantic annotation system and method that are capable of converting natural language character strings, entered by a user using an input device, into semantically-readable knowledge structure documents in real time. The present invention is provided to automatically convert information, created in the form of short passages using a mobile device in daily life, into machine-readable documents and associate the information with other documents over the web, thereby enabling information created in daily life to be effectively shared over the web.

### 2. Description of the Related Art

Since the World Wide Web has many problems representing knowledge, many attempts have been made to solve the problems. The conventional technologies used for these attempts include a system for performing annotation on HyperText Markup Language (HTML) documents using Simple HTML Ontology Extension (SHOE) (see Document 1: J. Heflin, J. Hendler, and S. Luke. Shoe: A knowledge representation language for internet applications. In Technical Report CS-TR-4078, volume UMIACS TR-99-7. Dept. of Computer Science, University of Maryland at College Park, 1999), and a system for enabling a plurality of users to collaboratively perform annotation on given HTML web documents using web browsers, which uses a method in which, when information is posted on a web site, users provide their own information or opinions and edit web pages (see Document 2: B. Jung, I. Yoon, H. Lim, F. A. Ramirez-Weber, and D. Petkovic. Annotizer: User-friendly www annotation system for collaboration in research and education environments. In The IASTED International Conference on Web Technologies, Applications and Services, WTAS 2006, 2006.). Moreover, there are disclosed a method of allowing a user to select a specific part from a given document and annotate the selected part using a given semantically-readable knowledge structure (see Document 3: M. Backhaus and J. Kelso. Proceedings of the workshop on social and collaborative construction of structured knowledge (ckc 2007) at the 16th International World Wide Web Conference (www2007) Banff, Canada, May 8, 2007. In N. F. Noy, H. Alani, G. Stumme, P. Mika, Y. Sure, and D. Vrandecic, editors, CKC, volume 273 of CEUR Workshop Proceedings. CEUR-WS.org, 2007), and a system for enabling a plurality of users to simultaneously prepare Wiki documents by extending the open source Semantic MediaWiki (SMW) system capable of searching, constructing, tagging and evaluating the content of the Wikipedia.

In the above-described conventional systems and methods, given documents are analyzed and then annotated, so that it is difficult to learn the writers' intentions of using specific words, with the result that accurate annotation cannot be performed.

### SUMMARY OF THE INVENTION

Accordingly, the present invention has been made keeping in mind the above problem occurring in the prior art, and an object of the present invention is to provide a system and method which are capable of performing annotation in real time at the moment writers write documents, thereby solving the above problem.

In order to accomplish the above object, the present invention provides a real-time semantic annotation system, including a natural language character string input device for enabling a user to enter natural language character strings; a character string pattern-triplet mapping table configured such that the corresponding relationship between natural language character string patterns and triplets has been stored; a triplet extraction device for extracting triplets from the entered natural language character strings using the character string pattern-triplet mapping table; an alternative word recommendation device for searching for and recommending an alternative word when it is difficult to understand the meaning of a word of each of the entered natural language character strings because it is not supported by the semantically-readable knowledge structure database; and a machine-readable document generation device for converting the extracted triplets into machine-readable documents while referring to a semantically-readable knowledge structure.

The natural language character string input device may be a device for enabling a user to enter natural language character strings, such as a keyboard or a touch screen.

The natural language character string patterns may have data structures for enabling natural language character strings to be structurally analyzed, such as regular expressions or context-sensitive grammar trees.

The alternative word recommendation device may include an output device for enabling a user to recognize an alternative word while entering a word, such as a screen output device or a voice message output device.

The semantically-readable knowledge structure database may support message formats capable of representing knowledge in machine-readable form, such as Web Ontology Language (OWL) format and Knowledge Interchange Format (KIF).

Furthermore, the machine-readable document generation device may include a web browser for generating documents in OWL format or KIF, and outputting the documents through a screen or storing the documents in some other server over a network.

### BRIEF DESCRIPTION OF THE DRAWINGS

The above and other objects, features and advantages of the present invention will be more clearly understood from the following detailed description which is made in conjunction with the accompanying drawing, in which:

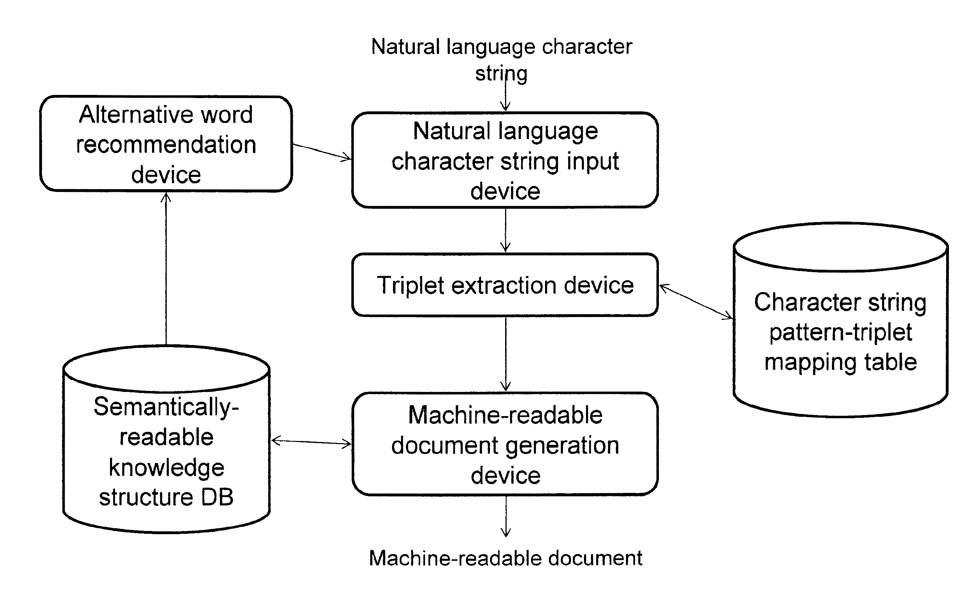

FIG. 1 is a conceptual diagram schematically illustrating a real-time semantic annotation system according to the present invention.

### DESCRIPTION OF THE PREFERRED EMBODIMENTS

Embodiments of the present invention will be described in detail below with reference to the accompanying drawing. In the following description of the present invention, detailed descriptions of related well-known functions or constructions will be omitted to prevent the gist of the present invention from being obscured.

As illustrated in FIG. 1, a real-time semantic annotation system according to the present invention includes a natural language character string input device, a triplet extraction device, a semantically-readable knowledge structure document generation device, an alternative word recommendation device, a character string pattern-triplet mapping table, and a semantically-readable knowledge structure database.

The natural language character string input device includes an input device for enabling a user to enter natural language character strings and an output device for enabling entered content to be checked. The input device may be one of a variety of devices capable of entering natural language character strings, such as a keyboard and a touch pad. The input device capable of checking entered content may be any device capable of checking character strings entered by a user, such as a monitor capable of visually checking entered content or a speaker capable of audibly checking entered content.

A semantically-readable knowledge structure refers to a structure in which knowledge has been structured in machine-readable form, as shown in the following Table 1. This structure includes a class and its attribute. For example, "Country" has the attribute "hasCapital." This attribute describes the knowledge that "City" should be provided as an object. That is, this structure corresponds to a concept regarding the detailed knowledge "<Korea><hasCapital><Seoul>" and "<China><hasCapital> <Beijing>."

**Table 1: Example of semantically-readable knowledge structure document**

| **Semantically-readable knowledge structure document** |
|---|
| Xmlns:bk='http://example/ontology/country' |
| |
| <owl:Ontology rdf:about=""/> |
| <owl:Class bk:ID="Country"/> |
| <owl:Class bk:ID="City"/> |
| |
| <owl:ObjetProperty bk:ID="hasCapital"> |
| <rdfs:range bk:resource="#City"/> |
| <rdfs:domain bk:resource="#Country"/> |
| </owl:ObjectProperty> |

A character string pattern-triplet mapping table is composed of the following character string patterns and their corresponding triplets, as shown in Table 2. The central parts of the triplets correspond to the attributes of the semantically-readable knowledge structure. Table 1 shows merely one example. It should be noted that although "isA", "definedAs" and "motivationOf" are not described in Table 1, they are also possible.

**Table 2:**

| Example of character string pattern-triplet mapping table | |
|---|---|
| Character string pattern | Triplet |
| The capital of ARG1 | <ARG1> <hasCapitalCity> <*> |
| ARG1 is ARG2 | <ARG2> <isA> <ARG2> |
| ARG1 express ARG2 | <ARG1> <definedAs> <ARG2> |
| ARG1 aim at ARG2 | <ARG1> <motivationOf> <ARG2> |

The meaning of the character string pattern-triplet mapping table will now be described in conjunction with the triplet extraction device. The triplet extraction device extracts a triplet from an entered natural language character string on the basis of a character string pattern-triplet mapping table. First, when a natural language character string is given, it is compared with all the character string patterns of the character string pattern-triplet mapping table. For example, when "Tom expresses regret" is entered, this corresponds to the third character string pattern of Table 2. It will be apparent that the fact that "expresses" corresponds to "express" can be detected using a module in which the rule of removing the third person suffix "es" has been implemented. At a subsequent step, it is checked whether words corresponding to ARG1 and ARG2 do not violate a semantically-readable knowledge structure. For example, in the case of "The capital of apple," a word corresponding to ARG1 is "apple." Furthermore, according to a triplet corresponding to its character string pattern and its semantically-readable knowledge structure, ARG1 should be "country." The reason for this is that according to Table 2, the range of "hasCapitalCity" is defined as "country" in the semantically-readable knowledge structure. In order to find the facts that "Korea" is "country" and "apple" is not "country," a machine-readable electronic dictionary may be used. A representative machine-readable electronic dictionary is WordNet. At a subsequent step, a triplet is created to replace ARG. When the character string "The capital of Korea" is entered, a word corresponding to ARG1 is "Korea," so that the triplet <Korea><hasCapitalCity><*> is created. Here, the symbol "*" implies that content to be entered therein has not been entered. A machine-readable document that is created at the moment "The capital of Korea" is entered is shown on the right upper side of Table 3. That is, since "city" has not been entered, a document in which corresponding content is empty is created. When a user enters the remaining content "is Seoul," the triplet <T1><isA><Seoul> is created. Here, T1 refers to the part "*" of a triplet extracted from "The capital of Korea." Accordingly, as shown in the last line of Table 3, a total of two triplets are extracted. A machine-readable document into which the above content is converted is shown on the right upper side of Table 3.

The alternative word recommendation device is a device for providing notification of directing a user to enter "country" when the user enters "apple" at the moment he or she should enter "country," as described above. In this case, a popup window showing a message that a user should enter "country" may be displayed on the user's screen, or a voice directing a user to enter "country" may be issued.

The machine-readable document generation device is a device for converting triplets into machine-readable documents while referring to semantically-readable knowledge structures, as described above. For example, in the case of <Korea><hasCapital><*>, the facts that the domain of "hasCapital" is "Country" and the range thereof is "City" have been already described in the semantically-readable knowledge structure (see Table 2), so that the facts that "Korea" corresponds to the class "Country" and the symbol "*" corresponds to the class "City" class can be found. Accordingly, when the information is expressed in Extensible Markup Language (XML), a document on the right upper side of Table 3 can be obtained.

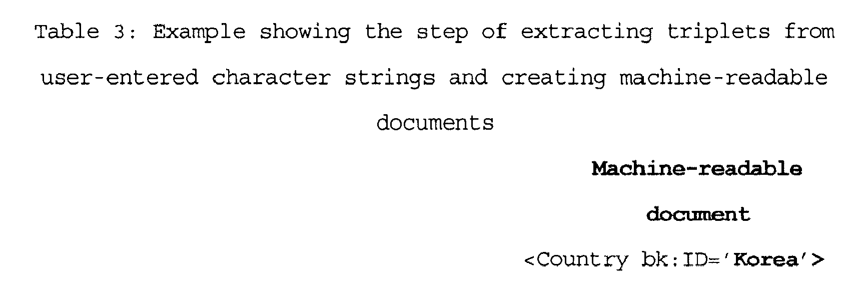

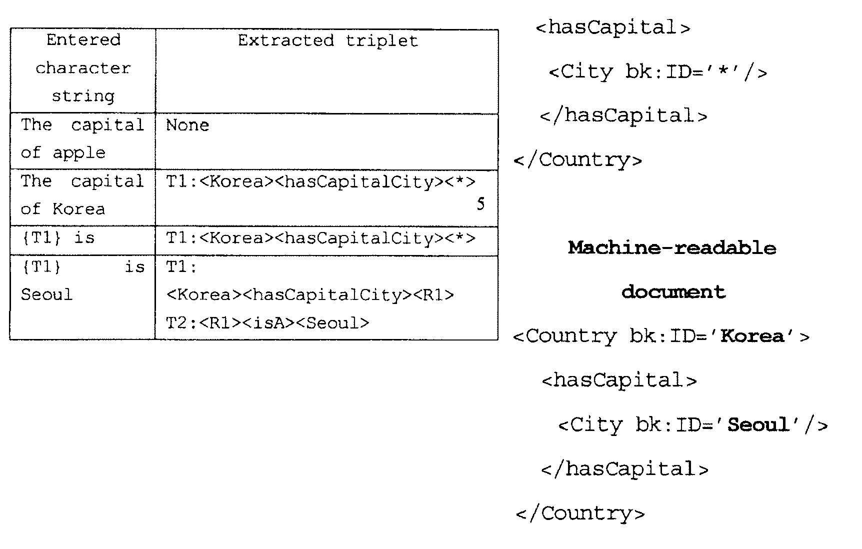

In accordance with the real-time semantic annotation system and method according to the above-described present invention, annotation is performed at the moment a user enters a character string, so that the user can enter an alternative word in the case where a word that the semantic annotation device cannot process is entered. Accordingly, the present invention is advantageous in that accurate annotation can be performed.

Furthermore, when multiple users enter character strings related to a single topic using a real-time semantic annotation system at the same time, it is possible to detect the conflict therebetween in real time.

Although the real-time semantic annotation system and method according to the present invention have been described in conjunction with Tables 1 to 3, the present invention is not limited to the embodiments of the present specification and the accompanying drawing, but those skilled in the art can make various modifications without departing from the scope and spirit of the invention.

## Claims

1. A real-time semantic annotation system, comprising:
a natural language character string input device for enabling a user to enter natural language character strings;
a character string pattern triplet-mapping table for storing natural language character string patterns and their corresponding triplets;
a triplet extraction device for converting the entered natural language character strings into triplets by analyzing and processing the entered natural language character strings using the pattern-triplet mapping table;
an alternative word recommendation device for providing notification that a user should enter an alternative word; and
a machine-readable document generation device for generating machine-readable documents from the triplets using a semantically-readable knowledge structure.

2. The real-time semantic annotation system as set forth in claim 1, wherein the natural language character string input device comprises an input device, such as a keyboard or a touch pad for enabling character strings to be entered, and an output device, such as a monitor for enabling the entered character strings to be visually checked or a sound output device for enabling the entered character strings to be audibly checked.

3. The real-time semantic annotation system as set forth in claim 1, wherein the character string pattern-triplet mapping table is configured such that ARG parts of the character string patterns have been replaced with ARGs of the triplets.

4. The real-time semantic annotation system as set forth in claim 1, wherein the character string pattern-triplet mapping table is configured to represent information to be entered using a symbol, such as "*."

5. The real-time semantic annotation system as set forth in claim 1, wherein the triplet extraction device records a history of a part of a triplet represented using a symbol, such as "*", and fills the part with corresponding information when the information is entered.

6. The real-time semantic annotation system as set forth in claim 1, wherein the alternative word recommendation device is configured to notify a user of the alternative word so that the user can enter a word suitable for a semantically-readable knowledge structure.
